# EUROPEAN PATENT APPLICATION

(11) **EP 1 088 797 A1**
(43) Date of publication of application: **04.04.2001**
(21) Application number: 00308518.0
(22) Date of filing: 28.09.2000
(51) Int. Cl.: C03C 25/12, B01J 19/08

(54) **Electron irradiating apparatus and curing method**

(30) Priority: 28.09.1999 JP 27405899
(71) Applicant: SHIN-ETSU CHEMICAL CO., LTD., Chiyoda-ku Tokyo (JP)
(72) Inventor: Ohba, Toshio, Annaka-shi, Gunma-ken (JP); Kawada, Nobuo, Annaka-shi, Gunma-ken (JP); Ueno, Masaya, Annaka-shi, Gunma-ken (JP)
(74) Representative: Stoner, Gerard Patrick

(57) **Abstract**

An electron irradiating apparatus includes a hollow circular housing (1), a hollow circular window (4) disposed inside the housing and defining inward a passageway (5), a circular filament (2) disposed between the housing and the window for emitting thermal electrons, and a grid (3) disposed between the filament and the window for controlling the thermal electrons so as to move straight toward the passageway. While an optical fiber coated with an electron beam-curable coating material is moved through the passageway, the apparatus is operated such that thermal electrons are emitted by the filament, controlled by the grid, transmitted by the window to the passageway, and irradiated to the coating on the optical fiber for curing the coating.

## Description

This invention relates to an electron irradiating apparatus for use in curing a coating of electron beam-curable material on an optical fiber and a method for curing the coating material.

### BACKGROUND

Optical communications fibers include a variety of types such as quartz glass, multi-component glass and plastic fibers. In reality, quartz glass fibers are vastly used in a wide variety of applications because of their light weight, low loss, high durability and high transmission capacity. Since quartz glass fibers are very thin and sensitive to external factors, quartz glass fibers for optical communications are generally of the construction that a quartz glass fiber which is spun from a melt is coated with a liquid curable resin capable of curing to a soft state, the coating is cured to form a primary coating, and the primary coating is protected with a secondary coating using a liquid curable resin capable of curing to a hard state. This is generally designated a coated optical fiber or simply optical fiber. A tape element is fabricated by bundling several, typically four, coated optical fibers and coating the bundle with a taping material, followed by curing.

Typical of the coating material are urethane acrylate base ultraviolet-curable resin compositions. As disclosed in JP-B 1-19694 and Japanese Patent Nos. 2,522,663 and 2,547,021, liquid UV-curable resin compositions comprising a urethane acrylate oligomer, a reactive monomer, and a polymerization initiator are known. To meet the recent demand for increasing the drawing speed of optical fibers for productivity improvement purposes, the UV curing system can find no solution other than the use of an increased number of UV lamps. This has a limit when curing is effected in a limited space. Japanese Patent No. 2,541,997 discloses electron radiation as exemplary actinic energy radiation, but does not refer to electron irradiating apparatus. Since prior art electron irradiating apparatus includes a rectilinear filament, grid and window whereby electron beams are irradiated in parallel, it is suited for irradiation of electron radiation to sheet-shaped articles, but inefficient in irradiating electron radiation to a very thin elongated article such as an optical fiber. The above patent does not refer to the accelerating voltage. If electron beams accelerated at high voltage as used in the prior art are irradiated to optical fibers, the dopant which is added to the optical fiber core in order to provide an increased refractive index can be altered or degraded, resulting in an undesirably increased transmission loss.

In general, electron beams are produced by conducting electric current through a filament to heat the filament for emitting thermal electrons, and accelerating the thermal electrons under the impetus of a voltage (accelerating voltage) to form electron beams. The accelerating voltage affects the penetration depth of electrons when irradiated to the optical fibers. If the accelerating voltage is too low, only a surface layer of the resin coating is cured.

An object of the invention is to provide an electron irradiating apparatus suited for the treatment of a thin elongated article and typically, effective in curing a coating material on an optical fiber. Another object of the invention is to provide a method for curing a coating material on an optical fiber without detracting from the optical fiber performance.

It has been found that when an electron irradiating apparatus is constructed as comprising an arcuate, circular ring, elliptic ring or spiral filament, a grid and a window arranged concentrically around and transverse to an axially extending passageway through which a thin elongated article such as an optical fiber travels, the apparatus is effective in treating the thin elongated article, and typically in curing a coating material on an optical fiber.

In one aspect, the invention provides an electron irradiating apparatus comprising a hollow housing of sectorial, circular or elliptic cross-sectional shape having a center; a hollow window of sectorial, circular or elliptic cross-sectional shape disposed inside the housing and defining inward a central passageway; a filament of arcuate, circular ring, elliptic ring or spiral shape disposed inside the housing and surrounding the window, for emitting thermal electrons; and a grid disposed between the filament and the window for controlling the thermal electrons emitted by the filament so as to move straight toward the center of the housing. The thermal electron beams emitted by the filament and controlled by the grid so as to move straight toward the housing center are transmitted by the window and irradiated to a thin elongated article that travels through the central passageway. Typically, the thin elongated article is an optical fiber coated with an electron beam-curable coating material.

In another aspect, the invention provides a method for curing an electron beam-curable coating material coated on an optical fiber using the above apparatus, comprising the steps of moving the coated optical fiber through the central passageway, and operating the apparatus such that the thermal electrons emitted by the filament are accelerated by the grid and the window at an accelerating voltage of 30 to 150 kV and advanced straight toward the central passageway, and the accelerated electron beams are transmitted by the window and irradiated to the coating material on the optical fiber for curing the coating material.

Other aspects are set out in the claims.

### BRIEF DESCRIPTION OF THE DRAWINGS

The above and other-objects, features and advantages of the invention will be better understood by reading the following description taken in conjunction with the accompanying drawings.

FIG. 1 is a cross-sectional view of an electron irradiating apparatus according to one embodiment of the invention, which is divided into two halves.

FIG. 2 is a plan view showing one half of the apparatus of FIG. 1.

### DETAILED DESCRIPTION

The electron irradiating apparatus of the invention includes an arcuate, circular ring, elliptic ring or spiral filament, a grid and a window which are arranged in a housing and concentrically around and transverse to an axially extending central passageway through which a thin elongated article such as an optical fiber travels. When the filament is arcuate, it is preferable to use two or more sections in combination, such that two sections of each pair are diametrically opposed while they are disposed in a common plane or different planes. Where the filament is circular ring, elliptic ring or spiral, it may be partially interrupted if necessary.

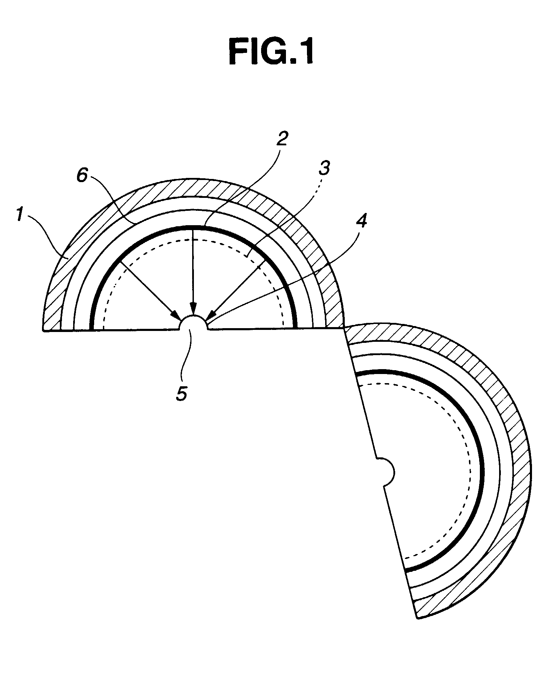

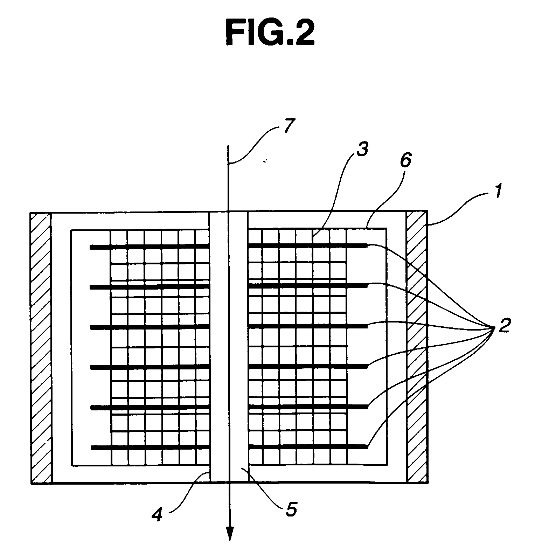

Referring to FIGS. 1 and 2, one embodiment of the apparatus of the invention is illustrated as including a hollow housing or chamber 1 of circular cross-sectional shape (or cylindrical) having a central axis. The interior of the housing 1 can be kept vacuum. Disposed within the housing 1 is a filament 2 of circular ring shape which generates thermal electrons when heated. Within the housing 1, a grid 3 of circular ring shape is disposed inside the filament 2 for controlling the thermal electrons. The voltage between the filament 2 and the grid 3 acts such that the thermal electrons are moved straight toward the center of the housing 1 as shown by arrows in FIG. 1. As best shown in FIG. 2, a plurality of ring filaments 2 and ring grids 3 are arranged in an axial direction of the housing.

Disposed near the center of the housing 1 is a hollow window 4 of circular cross-sectional shape (or cylindrical). The space between the window 4 and the housing 1 is kept vacuum as described above. The window 4 defines inward a central hollow zone which is a passageway 5 through which a thin elongated article 7 such as an optical fiber travels. The passageway 5 is under atmospheric pressure. The window 4 is formed of a metal foil such as titanium having a thickness sufficient to permit electron beams to pass therethrough. The metal foil is retained by a grid-shaped or mesh support of copper or similar metal disposed inside. With the above arrangement, electron beams are accelerated by the predetermined accelerating voltage between the filament 2 and the window 4, transmitted by the metal foil and network support, and irradiated to the thin elongated article such as a coating material on an optical fiber. Understandably, the network support may be omitted if the thin metal foil alone has a sufficient strength to keep the housing interior vacuum. The window 4 has an inner diameter of about 5 to 50 mm, for example, although the inner diameter varies with the speed at which the thin elongated article such as an optical fiber travels.

In the illustrated embodiment, each of the housing 1, filament 2, grid 3 and window 4 is divided into two halves such that the halves are removably joined.

Although the housing 1 is illustrated as having a hollow circular cross-section, it may also be configured to a hollow sectorial or hollow elliptic cross-sectional shape (sectorial cylinder or elliptic cylinder). The remaining components conform to the shape of the housing 1. More particularly, the window 4 is accordingly configured to an arcuate or hollow sectorial or hollow elliptic cross-sectional shape, and the filament 2 is configured to an arcuate or elliptic ring shape so as to surround the window 4. The filament 2 may also take the form of helical turns around the window 4. It is noted that the grid 3 is disposed so as to direct the thermal electrons from the filament 2 straight toward the window 4. In accordance with the shape and arrangement of the filament 2, the grid 3 of an arcuate, elliptic ring, spiral or circular ring shape may be disposed. Although each of the housing 1, filament 2, grid 3 and window 4 is divided into two halves in the illustrated embodiment, it may be equally divided into three or more sections such that the sections are removably joined together. Usually, the apparatus of generally circular or elliptic shape is operated so that electron beams are irradiated toward the center from all directions whereby the entire periphery of the thin elongated article (e.g., coated optical fiber) is simultaneously exposed to electron beams. Alternatively, the apparatus is operated in a semi-circular shape so that electron beams are irradiated toward the center from 180° directions whereby only the half periphery of the thin elongated article is exposed to electron beams.

In the illustrated apparatus, a terminal or electrode 6 is disposed outside the filament 2 for reflecting thermal electrons inward. Such an electrode may be added to the apparatus insofar as it may not compromise the objects of the invention.

The above-illustrated apparatus is best suited in curing an electron beam-curable coating material coated on an optical fiber. The method for curing an electron beam-curable coating material on an optical fiber according to the invention uses the electron irradiating apparatus described above. The method involves moving the coated optical fiber 7 through the central passageway 5, and directing electron beams to the coating material on the optical fiber for curing the coating material.

The coating material may be either a primary coating material or a secondary coating material, which has any well-known composition based on a conventional electron beam-curable resin. The electron beam-curable resin is not critical as long as it has a functional group capable of radical polymerization upon exposure to electron beams. Desirable are compounds having at least one radical-polymerizable (meth)acryloyl group per molecule. From the working standpoint, the resin desirably has a viscosity of about 500 to 10,000 centipoise at 25°C for compatibility with manufacturing conditions of bare optical fibers and especially about 500 to 4,000 centipoise at 25°C for compatibility with high speed manufacturing conditions.

The coating material thus formulated is cured to optical fibers by irradiating electron beams thereto. For protecting the underlying optical fiber from micro-bends induced by external forces and temperature changes, the cured coating of primary coating material should desirably have a Young's modulus of up to 0.2 kgf/mm². For reinforcement of the optical fiber, the cured coating of secondary coating material overlying the primary coating should desirably have a Young's modulus of at least 0.4 kgf/mm².

In one procedure, the primary coating material is coated on an optical fiber, the secondary coating material is immediately coated thereon, and electron radiation is irradiated thereto for curing both the coatings. This procedure is effective in preventing any increase of transmission loss of the optical fiber as well as simplifying the process.

The invention is also applicable to the process of manufacturing an optical fiber tape wherein a plurality of, typically four or eight, coated optical fibers (having primary and secondary coating materials coated and cured to bare optical fibers) are bundled and a resin having a relatively high Young's modulus is coated and cured to the bundle of coated optical fibers for integration. The taping resin should desirably have a Young's modulus of at least 0.4 kgf/mm².

The penetration depth of electrons depends on the accelerating voltage. In order that electron beams penetrate through the coating material to the depth, but short of the core of the optical fiber, the accelerating voltage should be set in the range of 30 to 150 kV, desirably 50 to 100 kV. With an accelerating voltage of lower than 30 kV, the coating material is not fully cured to the depth. An accelerating voltage of higher than 150 kV can increase the transmission loss of the optical fiber.

The dose of electron beams is determined by the electric current conducted through the filament and the processing speed. Usually the resin can be cured by irradiating electron beams in a dose of 1 to 4 Mrad (10 to 40 kGy). To comply with a high speed of drawing, the electric current value is increased in proportion to the processing speed.

The optical fiber is preferably moved at a speed of at least 500 m/min, more preferably 500 to 3,000 m/min, and further preferably 1,000 to 2,000 m/min. The thermal electrons emitted by conducting electric current through the filament in vacuum for heating it are accelerated by the voltage between the filament, grid and window, to form electron beams which advance straight toward the window as shown by arrows in FIG. 1. The electron beams are transmitted by the window (which is provided for keeping the housing interior vacuum) and irradiated to the coating material on the optical fiber whereby the coating material is cured.

There has been described an electron irradiating apparatus which produces convergent electron beams and permits the electron beams to be effectively irradiated to a coating material on an optical fiber. Rapid curing is possible with a compact apparatus. We have found that such apparatus and methods can be successful in effectively curing the coating material without detracting from the optical fiber performance.

Japanese Patent Application No. 11-274058 is incorporated herein by reference.

Although some preferred embodiments have been described, many modifications and variations may be made thereto in light of the above teachings. It is therefore to be understood that the invention may be practised otherwise than as specifically described in the examples.

## Claims

1. An electron irradiating apparatus comprising
a hollow housing of sectorial, circular or elliptic cross-sectional shape having a center,
a hollow window of sectorial, circular or elliptic cross-sectional shape disposed inside said housing and defining inward a central passageway,
a filament of arcuate, circular ring, elliptic ring or spiral shape disposed inside said housing and surrounding said window, for emitting thermal electrons, and
a grid disposed between said filament and said window for controlling the thermal electrons emitted by the filament so as to move straight toward the center of said housing,
whereby the thermal electron beams emitted by said filament and controlled by said grid so as to move straight toward the housing center are transmitted by said window and irradiated to a thin elongated article that travels through the central passageway.

2. The apparatus of claim 1 wherein the thin elongated article is an optical fiber coated with an electron beam-curable coating material.

3. A method for curing an electron beam-curable coating material coated on an optical fiber using the apparatus of claim 2, comprising the steps of:
moving the coated optical fiber through the central passageway, and
operating the apparatus such that the thermal electrons emitted by said filament are accelerated by said grid and said window at an accelerating voltage of 30 to 150 kV and advanced straight toward the central passageway, and the accelerated electron beams are transmitted by said window and irradiated to the coating material on the optical fiber for curing the coating material.

4. Electron irradiation apparatus comprising a housing (1) with an electron-permeable window (4) directed onto an irradiation zone, an emitter element (2) in the housing for emitting thermal electrons, and a grid (3) between the emitter element (2) and the window (4) for accelerating the thermal electrons from the emitter element (2) towards the window (4),
characterized in that the irradiation zone is an axial passageway of the apparatus along which in use an elongate object is passed axially to be irradiated, and the housing, window and emitter element are shaped to extend around an arc circumferentially of the axial passageway, such that the emitted electrons are accelerated onto it convergently in a radial plane.

5. Electron irradiation apparatus according to claim 4 in which the electron permeable window (4) is directed onto the axial passageway from two diametrically-opposed sides thereof.

6. Electron irradiation apparatus according to claim 5 in which the window (4) entirely surrounds the axial passageway.

7. Electron irradiation apparatus according to any one of claims 4 to 6 in which the housing is subdivided circumferentially into sectors.

8. Electron irradiation apparatus according to claim 7 in which the sectors are moveable relative to one another for access to the passageway.

9. Electron irradiation apparatus according to any one of claims 4 to 8 in which the window (4) is substantially cylindrical.

10. Electron irradiation apparatus according to any one of the preceding claims in which the axial passageway is not more than 50mm across.

11. Electron irradiation apparatus according to any one of claims 4 to 10 in which an accelerating voltage to be applied to the grid (3) is from 30 to 150kV.

12. Optical fiber manufacturing apparatus comprising electron irradiation apparatus according to any one of claims 1 and 4 to 12, and means for applying an electron-beam curable coating material to an optical fiber and for feeding the coated fiber into and along the axial passageway of the irradiation apparatus for curing of the coating.
